# EUROPEAN PATENT SPECIFICATION

(11) **EP 2 722 234 B1**
(45) Date of publication and mention of the grant of the patent: **09.03.2016**
(21) Application number: 13164703.4
(22) Date of filing: 22.04.2013
(51) Int. Cl.: B60R 11/04, B60R 19/48, H04N 5/225

(54) **Mounting structure of vehicle camera**
Montagestruktur einer Fahrzeugkamera
Structure de montage de caméra de véhicule

(30) Priority: 16.10.2012 JP 2012228595
(43) Date of publication of application: 23.04.2014
(73) Proprietor: Honda Access Corporation, Niiza-shi, Saitama 352-8589 (JP)
(72) Inventor: Morimoto, Yoshimi, Niiza-shi, Saitama (JP); Kitazaki, Yasuyuki, Niiza-shi, Saitama (JP); Mitsunari, Takahiro, Niiza-shi, Saitama (JP); Watanabe, Yuta, Niiza-shi, Saitama (JP)
(74) Representative: Weickmann & Weickmann

(56) References cited:
- WO-A1-2004/058542
- WO-A1-2008/022717
- WO-A2-2008/043713
- DE-U1-202004 014 825
- DE-U1-202009 002 067
- US-A1- 2003 175 027

## Description

### BACKGROUND OF THE INVENTION

### FIELD OF THE INVENTION

The present invention relates to a mounting structure of a vehicle camera with the features of the preamble part of claim 1, in which a mounting bracket that supports a camera is mounted to a garnish fixed to a vehicle body.

### DESCRIPTION OF THE RELATED ART

A mounting structure of an on-vehicle camera is known by JP 2011213193 A, in which a position/angle adjusting spacer is fitted in a pair of long holes formed in a mounting bracket fixed to a hatchback door of an automobile, and a nut is screwed onto the bolt which penetrates through the position/angle adjusting spacer and the on-vehicle camera, whereby the on-vehicle camera is fixed to the mounting bracket at an arbitrary position and angle.

However, the mounting structure described in JP 2011213193 A described above has a problem of deteriorating aesthetic appearance since the on-vehicle camera is exposed. Thus, improving the aesthetic appearance by covering the camera with a garnish is conceivable, but if the position and the angle of the camera are adjusted in the above described conventional mounting structure, the position of the tip end of the camera moves significantly. Therefore, in order to avoid interference with the camera, increase in size of the garnish cannot be avoided, and there arises a possibility of deteriorating the aesthetic appearance conversely.

WO 2004/058542 A1 discloses a mounting structure with the features of the preamble part of claim 1.

Further mounting structures of vehicle cameras are described in DE 202004014825 U1, WO 2008/043713 A2 and WO 2008/022717 A1.

### SUMMARY OF THE INVENTION

The present invention is made in the light of the aforementioned circumstances, and has an object to provide a mounting structure of a vehicle camera easy in adjustment of a mounting angle, and excellent in aesthetic appearance.

In order to achieve the object, according to the invention, there is provided a mounting structure with the features of claim 1.
Preferred embodiments are described in the dependent claims.

With the configuration of claim 1, the mounting bracket that supports the camera is mounted to the garnish fixed to the vehicle body, whereby the camera can be mounted to the vehicle body. The mounting bracket is pivotally supported at the garnish by the pivotal support portion provided at a tip end side, and is fixed to the garnish with at least two different angles by the fixing portion provided at a base end side. Therefore, not only the mounting angle of the camera can be easily adjusted, but also optimal images can be obtained by only adjusting the mounting angles of the common cameras even if the mounting heights of the cameras differ in accordance with vehicle types. Further, the pivotal support portion is provided at the tip end side of the mounting bracket. Therefore, the protruding amount of the camera supported at the mounting bracket from the vehicle body is made small, the moving amount of the tip end of the camera can be suppressed to a minimum at the time of adjustment of the angle to enhance aesthetic appearance and in addition, the camera can be protected by the mounting bracket.

According to the preferred embodiment described in claim 2, in addition to the configuration of claim 1, the pivotal support portion comprises a breakable pin provided at the mounting bracket, and a pin hole which is provided at the garnish and with which the pin is engaged.

With the above configuration of claim 2, the pivotal support portion includes the breakable pin provided at the mounting bracket, and the pin hole which is provided at the garnish and with which the pin is engaged. Therefore, the pin is broken at the time of slight collision of an automobile, whereby the mounting bracket is easily separated from the garnish and damage of the camera can be suppressed to a minimum.

With the configuration of the preferred embodiment described in claim 3, the garnish that abuts on the outer surface side of the vehicle body at the flange portion and the band base that abuts on the inner surface side of the vehicle body are fastened with the band, whereby the garnish is fixed to the vehicle body. Therefore, not only the garnish can be firmly fixed by sandwiching the vehicle body with the garnish and the band base, but also firm fixation is enabled without being influence by the shape of the garnish and the shape of the vehicle body.

With the configuration of the preferred embodiment described in claim 4,
the nut member that abuts on the inner surface side of the vehicle body is screwed onto the outer periphery of the garnish that abuts on the outer surface side of the vehicle body at the flange portion, whereby the garnish is fixed to the vehicle body. Therefore, firm fixation is enabled with the small number of components and the small number of assembly steps.

Here, a front bumper 11 of embodiments corresponds to the vehicle body of the present invention; and a first nut member 22 and a second nut member 23 of an embodiment correspond to the nut member of the present invention.

The above and other objects, characteristics and advantages of the present invention will be clear from detailed descriptions of the preferred embodiments which will be provided below while referring to the attached drawings.

### BRIEF DESCRIPTION OF THE DRAWINGS

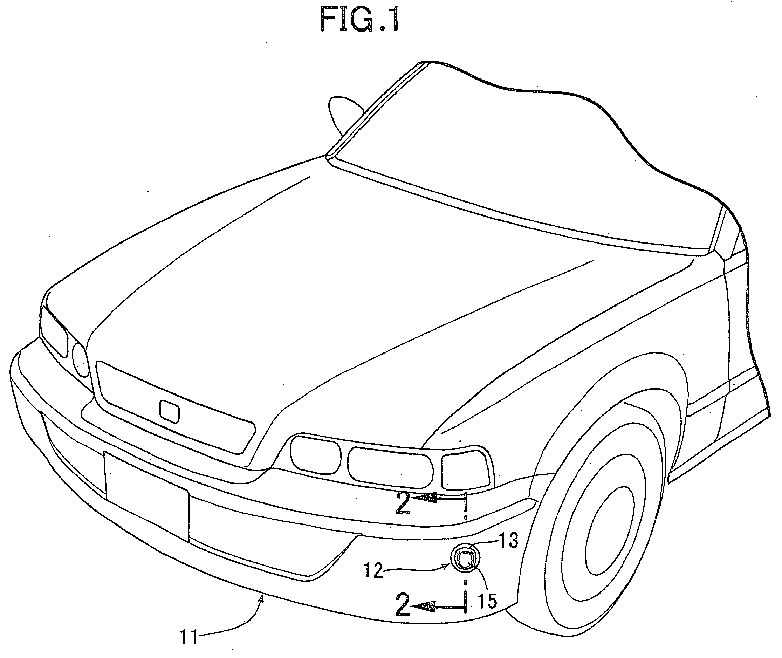

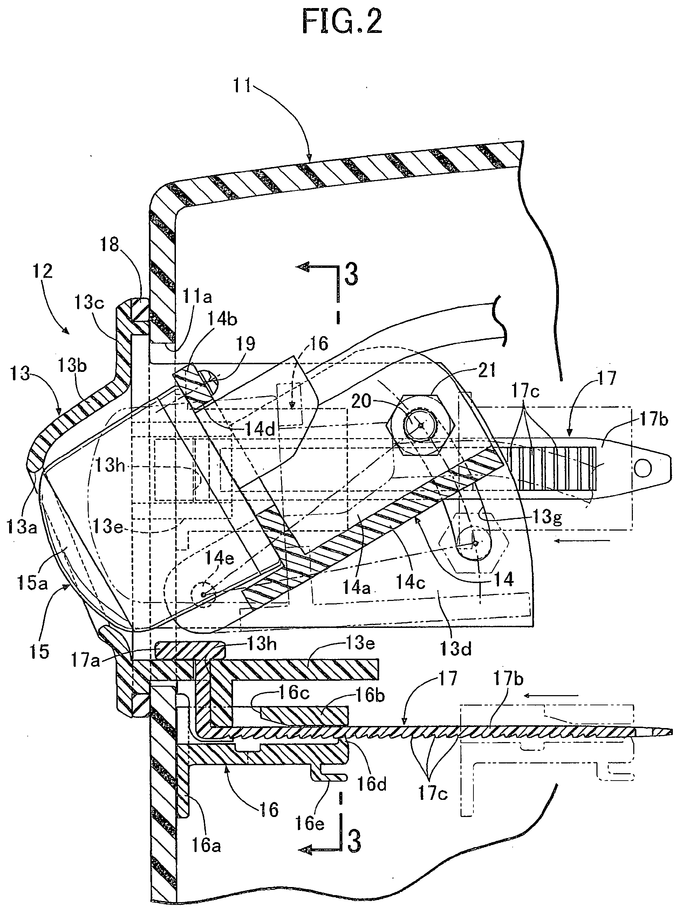

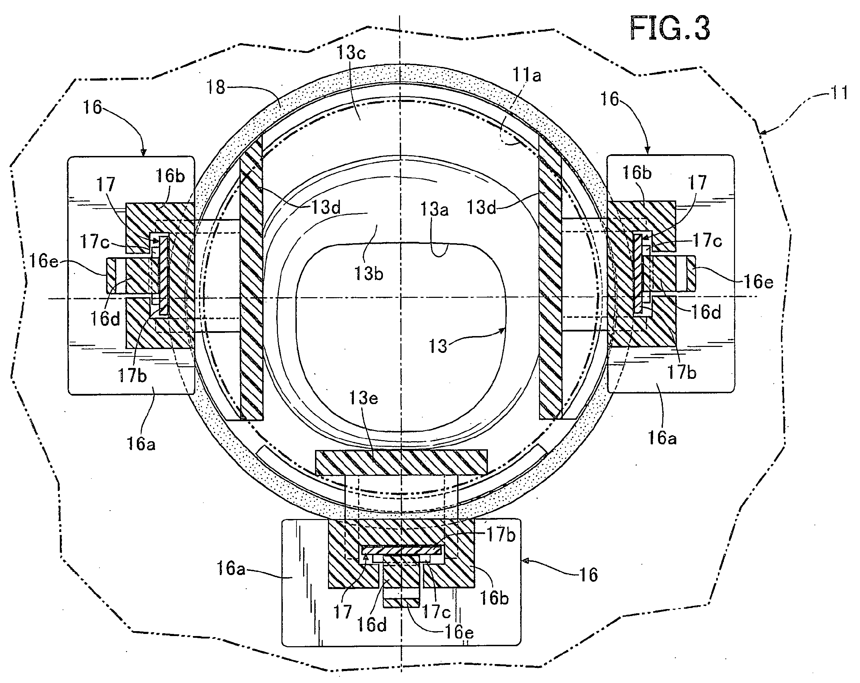

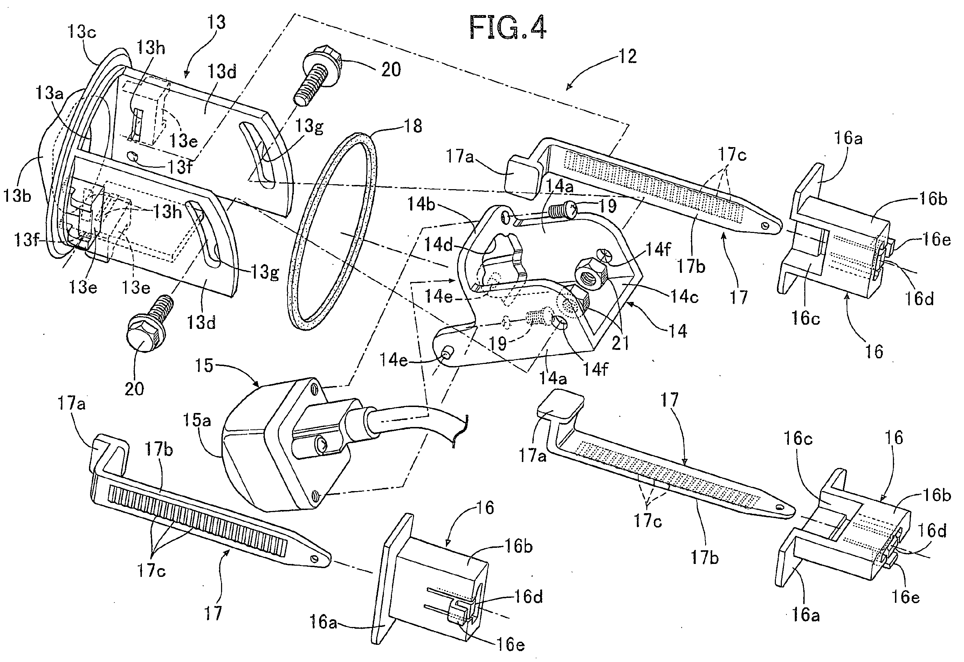

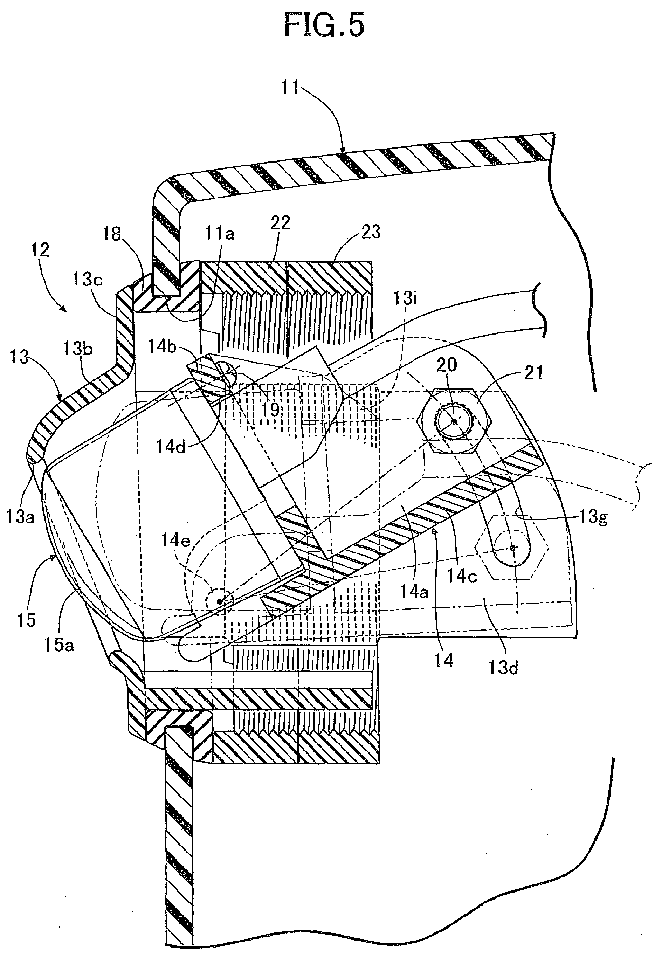

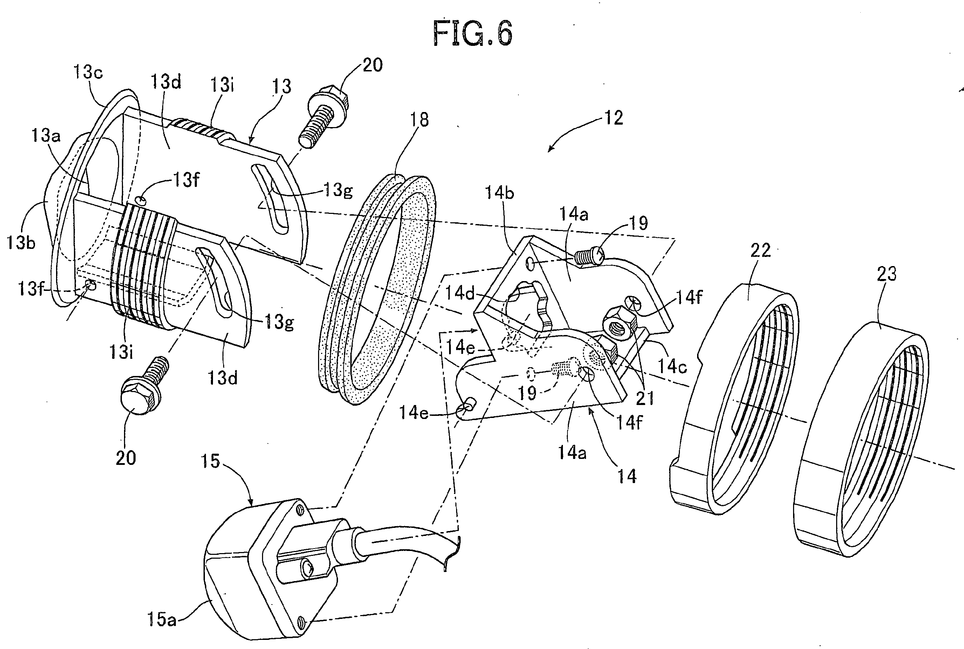

FIG. 1 is a perspective view of a front part of a vehicle body of an automobile (first embodiment); FIG. 2 is an enlarged sectional view taken along a line 2-2 in FIG. 1 (first embodiment); FIG. 3 is a sectional view taken along a line 3-3 in FIG. 2 in a state where a mounting bracket and a camera are omitted (first embodiment); FIG. 4 is an exploded perspective view of a camera unit (first embodiment); FIG. 5 is a view corresponding to FIG. 2 of the first embodiment (second embodiment); and FIG. 6 is an exploded perspective view of a camera unit (second embodiment).

### DESCRIPTION OF PREFERRED EMBODIMENTS

A first embodiment of the present invention will be described below based on FIGS. 1 to 4.

As shown in FIG. 1, a camera unit 12 is fitted to a corner portion of a front bumper 11 of an automobile, and an image of a neighborhood of the corner portion of the front bumper 11 that is taken by the camera unit 12 is displayed on a monitor in a vehicle compartment, whereby the camera unit 12 can assist a driver so that the front bumper 11 does not contact an obstacle when the driver performs garaging a car or the like.

As shown in FIGS. 2 to 4, the camera unit 12 includes a garnish 13, a mounting bracket 14, a camera 15, three band bases 16, three bands 17, and a seal member 18 formed by an O-ring.

The garnish 13 which is fixed to a circular opening 11a (see FIG. 2) formed in the front bumper 11 includes a cover portion 13b that protrudes from a surface of the front bumper 11 and has a lens opening 13a at a tip end, an annular flange portion 13c that is connectively provided to an outer periphery of the cover portion 13b and abuts on a surface of the front bumper 11, a pair of side walls 13d and 13d that are protrudingly provided at a rear surface of the flange portion 13c and extend parallel with each other, and three band base support portions 13e in total that are provided at outer surfaces of the pair of side walls 13d and 13d and the rear surface of the flange portion 13c.

The mounting bracket 14 includes a pair of side walls 14a and 14a, a front wall 14 that connects front ends of the pair of side walls 14a and 14a, and a bottom wall 14c that connects lower ends of the pair of side walls 14a and 14a. The camera 15 is fitted into an opening 14d of the front wall 14b of the mounting bracket 14 from a front side, and is integrally fastened to the mounting bracket 14 by two bolts 19 and 19 that penetrate through the front wall 14b from behind. In this state, an objective lens 15a of the camera 15 is exposed from the lens opening 13a of the garnish 13.

A pair of pins 14e and 14e that are protrudingly provided at the front ends of the pair of side walls 14a and 14a of the mounting bracket 14 which supports the camera 15 and are easily breakable are engaged in pin holes 13f and 13f that are formed at front ends of the pair of side walls 13d and 13d of the garnish 13, whereby a front end of the mounting bracket 14 is pivotally supported by the garnish 13 to be swingable in an up-down direction. Nuts 21 and 21 are screwed onto two bolts 20 and 20 that penetrate through arc-shaped long holes 13g and 13g that are formed at rear ends of the pair of side walls 13d and 13d of the garnish 13, and bolt holes 14f and 14f that are formed at rear ends of the pair of side walls 14a and 14a of the mounting bracket 14, and thereby the mounting bracket 14 and the camera 15 are fixed to the garnish 13 at an optional angle.

Each of the band bases 16 includes a flange portion 16a in a rectangular plate shape, a band guide portion 16b in a rectangular tubular shape that is connectively provided to the flange portion 16a, a cutout portion 16c formed in an inner side surface of the band guide portion 16b, a retaining claw portion 16d that is formed bendably at an outer side surface of the band guide portion 16b, and a protruding portion 16e provided at the retaining claw portion 16d. In a state in which the cutout portion 16c of the band guide portion 16b of the band base 16 is slidably retained to the band base support portion 13e of the garnish 13, the flange portion 16a of the band base 16 can abut on a back surface of the front bumper 11.

Each of the bands 17 is configured by a material having flexibility, and a number of concave and convex portions 17c that can be engaged with the retaining claw portion 16d of the band base 16a are included on one side surface of a band-shaped main body portion 17b that extends from a retaining portion 17a provided at one end thereof. The retaining portion 17a of the band 17 is retained to a band insertion hole 13h that is formed in the band base support portion 13e of the garnish 13 (see FIG. 2), and the main body portion 17b which is led out from the band insertion hole 13h is inserted through the band guide portion 16b through the cutout portion 16c of the band base 16.

Next, an operation of the embodiment of the present invention including the above described configuration will be described.

Assembly of the camera unit 12 to the front bumper 11 is performed according to the following procedures.

First, the three bands 17 are inserted through the band insertion holes 13h of the three band base support portions 13e of the garnish 13, and the retaining portions 17a are retained. Next, in order to fix the mounting bracket 14, to which the camera 15 is fixed with the two bolts 19 and 19 in advance, to the garnish 13, the nuts 21 and 21 are screwed onto the two bolts 20 and 20 that penetrate through the long holes 13g and 13g each in the arc shape formed at the rear ends of the pair of the side walls 13d and 13d of the garnish 13, and the bolt holes 14f and 14f which are formed at the rear ends of the pair of side walls 14a and 14a of the mounting bracket 14, in a state in which the pair of pins 14e and 14e of the mounting bracket 14 are engaged in the pair of the pin holes 13f and 13f of the garnish 13. At this time, the positions of the bolts 20 and 20 with respect to the long holes 13g and 13g are changed, whereby a depression angle of the camera 15 with respect to the garnish 13 can be optionally adjusted.

Subsequently, the garnish 13, the mounting bracket 14 and the camera 15 that are integrated are inserted into the opening 11 a of the front bumper 11 in a state in which the seal member 18 is fitted to a rear surface of the flange portion 13c of the garnish 13. Next, the band guide portion 16b of the band base 16 is slipped over a tip end of the main body portion 17b of each of the bands 17, and when the band base 16 is pushed in toward the flange portion 13c of the garnish 13 while the tip end of the main body portion 17b is pulled, the retaining claw portion 16d rides over the concave and convex portions 17c of the band 17, whereby the band base 16 slides, and finally, a peripheral edge of the opening 11 a of the front bumper 11 is sandwiched between the flange portion 13c of the garnish 13 and the flange portion 16a of the band base 16. In this state, the retaining claw portion 16d of the band base 16 engages with the concave and convex portions 17c of the band 17 so as not to be able to retreat, and the garnish 13 is firmly fixed to the front bumper 11.

In order to remove the garnish 13 from the front bumper 11, a finger is laid on the protruding portion 16e of the band base 16 to lift the retaining claw portion 16d, and in a state in which the retaining claw portion 16d is detached from the concave and convex portions 17c of the band 17, the band base 16 can be pulled out from the band 17.

As described above, according to the present embodiment, the mounting bracket 14 is pivotally supported at the garnish 13 by the pins 14e and 14e provided at the tip end side, and is fixed to the garnish 13 with different angles by the long holes 13g and 13g of the garnish 13 in a base end side. Therefore, not only the mounting angle of the camera 15 can be easily adjusted, but also optimal images can be obtained by only adjusting the mounting angles of the common cameras 15 even if the mounting heights of the cameras 15 differ in accordance with vehicle types. Further, since the pins 14e and 14e for pivotal support are provided at the tip end side of the mounting bracket 14, a protruding amount of the camera 15 supported at the mounting bracket 14 from the front bumper 11 can be made small, a moving amount of the tip end of the camera 15 is suppressed to the minimum at the time of adjustment of the angle. A gap between the objective lens 15a and the lens opening 13a of the garnish 13 is made small and aesthetic appearance can be enhanced, and furthermore, the camera 15 can be protected by the mounting bracket 14.

Further, the mounting bracket 14 is pivotally supported by the pins 14e and 14e which are provided at the mounting bracket 14 and are easily breakable, and the pin holes 13f and 13f which are provided in the garnish 13, and in which the pins 14e and 14e are engaged. Therefore, at the time of slight collision of the automobile, the pins 14e and 14e are broken, whereby the mounting bracket 14 easily separates from the garnish 13, and damage of the camera 15 can be suppressed to a minimum.

Further, at the flange portion 13c, the garnish 13 which abuts on the front surface side of the front bumper 11, and the band bases 16 which abut on the back surface side of the front bumper 11 are fastened with bands 17, whereby the garnish 13 is fixed to the front bumper 11, and therefore, not only the front bumper 11 is sandwiched by the garnish 13 and the band bases 16 and the garnish 13 can be firmly fixed, but also firm fixation is enabled without being influenced by the shape of the garnish 13 and the shape of the front bumper 11.

Hereinafter, a second embodiment of the present invention will be described based on FIGS. 5 and 6.

The second embodiment differs from the first embodiment in the fixing structure of the garnish 13 to the opening 11a of the front bumper 11, and the other structures are the same as those of the first embodiment.

The garnish 13 of the second embodiment includes male screw portions 13i on outer peripheries of a pair of side walls 13d and 13d, and a first nut member 22 and a second nut member 23 each in a ring shape can be screwed onto the male screw portions 13i. The seal member 18 is formed to be U-shaped in section and is fitted to the opening 11a of the front bumper 11 in advance, and when the garnish 13 is inserted into the opening 11a, the flange portion 13c abuts on a front surface of the seal member 18.

In a state in which the garnish 13 is inserted into the opening 11 a of the front bumper 11, the first nut member 22 and the second nut member 23 are screwed onto the male screw portions 13i on the outer peripheries of the pair of side walls 13d and 13d, whereby the peripheral edge of the opening 11a of the front bumper 11 is sandwiched between the flange portion 13c of the garnish 13 and the first nut member 22, and the garnish 13 is firmly fixed to the front bumper 11.

According to the second embodiment, the garnish 13 can be firmly fixed with the number of components and the number of assembly steps that are smaller than those in the first embodiment. In addition, by combined use of the first nut member 22 and the second nut member 23 as a double nut, looseness of these nuts can be reliably prevented.

Embodiments of the present invention are described above, but various design changes of the present invention can be made within the range without departing from the gist thereof.

For example, the vehicle body of the present invention is not limited to the front bumper 11 of the embodiments.

Further, the fixing structure of the camera 15 to the mounting bracket 14 is not limited to the embodiments, and can be any structure that can fix the camera 15 with at least two different angles.

A pin (14e) provided at a tip end side of a mounting bracket (14) is pivotally supported at a garnish (13) fixed to a vehicle body and a base end side of the mounting bracket (14) is fixed to the garnish (13) with at least two different angles by a bolt (20). Therefore, not only the mounting angle of a camera (15) can be easily adjusted, but also optimal images can be obtained by only adjusting the mounting angles of the common cameras (15) even if the mounting heights of the cameras (15) differ in accordance with vehicle types. Further, the pin (14e) is provided at the tip end side of the mounting bracket (14). Therefore, the protruding amount of the camera (15) supported at the mounting bracket (14) from the vehicle body is made small, the moving amount of a tip end of the camera (15) can be suppressed to a minimum at the time of adjustment of the angle to enhance aesthetic appearance, and in addition, the camera (15) can be protected by the mounting bracket (14). Accordingly, it is possible to provide a mounting structure of a vehicle camera easy in adjustment of a mounting angle, and excellent in aesthetic appearance.

## Claims

1. A mounting structure of a vehicle camera, the mounting structure comprising:
a garnish (13) adapted to being fixed to a vehicle body (11);
a mounting bracket (14) and;
a camera (15) supported on the mounting bracket (14);
wherein the mounting bracket (14) is pivotally supported at the garnish (13) by a pivotal support portion provided at a tip end side of the mounting bracket (14) near an objective lens (15a) of the camera (15), so that the mounting bracket (14) is pivotable around a pivot axis that is fixed relative to the garnish (13), and wherein the mounting bracket (14) is fixable to the garnish (13) by a fixing portion provided at a base end side of the mounting bracket (14) in at least two different pivot positions having different pivot angles with respect to the pivot axis,
**characterized in that** the garnish (13) comprises an annular flange portion (13c) and a pair of side walls (13d) protrudingly provided at a rear surface of the flange portion (13c) and extending in parallel with each other, the garnish (13) being adapted to be fixed to an opening (11 a) provided in the vehicle body (11) so that the rear surface of the flange portion (13c) abuts on an outer surface side of the vehicle body (11) and the pair of side walls (13d) extend rearwardly through the opening (11 a), wherein the bracket (14) is pivotally supported on the side walls (13d) of the garnish (13).

2. The mounting structure of a vehicle camera according to claim 1, wherein the pivotal support portion comprises a breakable pin (14e) provided at the mounting bracket (14), and a pin hole (13f) which is provided at the garnish (13) and with which the pin (14e) is engaged.

3. The mounting structure of a vehicle camera according to claim 1 or claim 2,
furthermore comprising:
at least a band (17) formed from a flexible material and comprising a retaining portion (17a) at one end thereof and a band-shaped main body portion (17b) extending from the retaining portion (17a) towards a free end, one side surface of the band-shaped main body portion (17b) comprising a number of concave and convex portions (17c);
at least a band base (16) comprising a flange portion (16a), a band guide portion (16b) connectively provided to the flange portion (16a) and a retaining claw portion (16d) that is formed bendably at an outer side surface of the band guide portion (16b),
wherein the garnish (13) is adapted to being fixed to the vehicle body (11) in a fixed state so that a peripheral edge of the opening (11a) of the vehicle body (11) is sandwiched between the flange portion (13c) of the garnish (13) and the flange portion (16a) of the band base (16), in which fixed state the band (17) is inserted through a band insertion hole (13h) provided in the garnish (13), so that the retaining portion (17a) is retained thereto and the band base (16) is slipped over the free end of the band-shaped main body portion (17b) of the band (17) so that the band-shaped main body portion (17b) of the band (17) is guided in the band guide portion (16b) of the band base (16) and the concave and convex portions (17c) of the band (17) are engaged by the retaining claw portion (16d) of the band base (16) in order to prevent the band-base (16) from being moved towards the free end of the band (17).

4. The mounting structure of a vehicle camera according to claim 1 or claim 2,
wherein a nut member (22, 23) that abuts on an inner surface side of the vehicle body is screwed onto an outer periphery of the garnish (13) that abuts on an outer surface side of the vehicle body (11) at the flange portion (13c), whereby the garnish (13) is fixed to the vehicle body (11).

## Patentansprüche

1. Montagestruktur von einer Fahrzeugkamera, wobei die Montagestruktur umfasst:
ein Verzierungselement (13), welches dazu eingerichtet ist, an einem Fahrzeugkörper (11) fixiert zu werden;
eine Montagehalterung (14) und;
eine Kamera (15), welche an der Montagehalterung (14) abgestützt ist;
wobei die Montagehalterung (14) schwenkbar an dem Verzierungselement (13) durch einen schwenkbaren Tragabschnitt abgestützt ist, welcher an einer äußeren Endseite von der Montagehalterung (14) nahe einer Objektivlinse (15a) von der Kamera (15) derart vorgesehen ist, dass die Montagehalterung (14) um eine Schwenkachse herum schwenkbar ist, welche relativ zu dem Verzierungselement (13) fixiert ist, und wobei die Montagehalterung (14) an dem Verzierungselement (13) durch einen Befestigungsabschnitt, welcher an einer Basisendseite von der Montagehalterung (14) vorgesehen ist, in wenigstens zwei unterschiedlichen Schwenkpositionen fixierbar ist, welche unterschiedliche Schwenkwinkel in Bezug auf die Schwenkachse haben,
**dadurch gekennzeichnet, dass** das Verzierungselement (13) einen ringförmigen Flanschabschnitt (13c) und ein Paar von Seitenwänden (13d) umfasst, welche vorstehend an einer hinteren Fläche von dem Flanschabschnitt (13c) vorgesehen sind und sich parallel zueinander erstrecken, wobei das Verzierungselement (13) dazu eingerichtet ist, an einer in dem Fahrzeugkörper (11) vorgesehenen Öffnung (11a) derart fixiert zu werden, dass die hintere Fläche von dem Flanschabschnitt (13c) an einer Außenseitenfläche von dem Fahrzeugkörper (11) anliegt und sich das Paar von Seitenwänden (13d) durch die Öffnung (11 a) nach hinten erstrecken, wobei die Halterung (14) schwenkbar an den Seitenwänden (13d) von dem Verzierungselement (13) abgestützt ist.

2. Montagestruktur von einer Fahrzeugkamera nach Anspruch 1, wobei der schwenkbare Tragabschnitt einen zerbrechlichen Stift (14e) umfasst, welcher an der Montagehalterung (14) vorgesehen ist, und ein Stiftloch (13f) umfasst, welches an dem Verzierungselement (13) vorgesehen ist und mit welchem der Stift (14e) im Eingriff ist.

3. Montagestruktur von einer Fahrzeugkamera nach Anspruch 1 oder Anspruch 2,
ferner umfassend:
wenigstens ein Band (17), welches aus einem flexiblen Material ausgebildet ist und einen Halteabschnitt (17a) an einem Ende davon und einen bandförmigen Hauptkörperabschnitt (17b), welcher sich von dem Halteabschnitt (17a) zu einem freien Ende erstreckt, umfasst, wobei eine Seitenfläche von dem bandförmigen Hauptkörperabschnitt (17b) eine Anzahl von konkaven und konvexen Abschnitten (17c) umfasst;
wenigstens eine Bandbasis (16), welche einen Flanschabschnitt (16a), einen Bandführungsabschnitt (16b), welcher verbindend an dem Flanschabschnitt (16a) vorgesehen ist, und einen Halteklauenabschnitt (16d), welcher biegbar an einer äußeren Seitenfläche von dem Bandführungsabschnitt (16b) ausgebildet ist, umfasst,
wobei das Verzierungselement (13) dazu eingerichtet ist, an dem Fahrzeugkörper (11) in einem festgelegten Zustand fixiert zu sein, so dass ein peripherer Rand von der Öffnung (11a) von dem Fahrzeugkörper (11) zwischen dem Flanschabschnitt (13c) von dem Verzierungselement (13) und dem Flanschabschnitt (16a) von der Bandbasis (16) angeordnet ist, in welchem festgelegten Zustand das Band (17) durch ein Bandeinführungsloch (13h) eingesetzt ist, welches in dem Verzierungselement (13) vorgesehen ist, so dass der Halteabschnitt (17a) daran gehalten ist und die Bandbasis (16) über das freie Ende von dem bandförmigen Hauptkörperabschnitt (17b) von dem Band (17) geschoben ist, so dass der bandförmige Hauptkörperabschnitt (17b) von dem Band (17) in dem Bandführungsabschnitt (16b) von der Bandbasis (16) geführt ist und die konkaven und konvexen Abschnitte (17c) von dem Band (17) durch den Halteklauenabschnitt (16d) von der Bandbasis (16) im Eingriff sind, um zu verhindern, dass die Bandbasis (16) zu dem freien Ende von dem Band (17) hin bewegt wird.

4. Montagestruktur von einer Fahrzeugkamera nach Anspruch 1 oder Anspruch 2,
wobei ein Mutterelement (22, 23), welches an einer Innenflächenseite von dem Fahrzeugkörper anliegt, auf einen Außenumfang von dem Verzierungselement (13) geschraubt ist, welches an einer Außenflächenseite von dem Fahrzeugkörper (11) an dem Flanschabschnitt (13c) anliegt, wodurch das Verzierungselement (13) an dem Fahrzeugkörper (11) fixiert ist.

## Revendications

1. Structure de montage d'une caméra de véhicule, la structure de montage comprenant :
une garniture (13) adaptée pour être fixée à une carrosserie de véhicule (11) ;
un support de montage (14) et ;
une caméra (15) supportée sur le support de montage (14) ;
dans laquelle le support de montage (14) est supporté de manière pivotante au niveau de la garniture (13) par une partie de support pivotante située au niveau d'un côté d'extrémité du support de montage (14) près d'un objectif (15a) de la caméra (15), de sorte que le support de montage (14) puisse pivoter autour d'un axe de pivotement qui est fixe par rapport à la garniture (13), et dans laquelle le support de montage (14) peut être fixé à la garniture (13) par une partie de fixation située au niveau d'un côté d'extrémité de base du support de montage (14) dans au moins deux positions de pivotement différentes présentant différents angles de pivotement par rapport à l'axe de pivotement,
**caractérisée en ce que** la garniture (13) comprend une partie bride annulaire (13c) et une paire de parois latérales (13d) situées en saillie au niveau d'une surface arrière de la partie bride (13c) et s'étendant parallèlement l'une à l'autre, la garniture (13) étant adaptée pour être fixée à une ouverture (11a) ménagée dans la carrosserie de véhicule (11) de sorte que la surface arrière de la partie bride (13c) soit en appui sur un côté de surface extérieure de la carrosserie de véhicule (11) et la paire de parois latérales (13d) s'étend vers l'arrière à travers l'ouverture (11a), le support (14) étant supporté de manière pivotante sur les parois latérales (13d) de la garniture (13).

2. Structure de montage d'une caméra de véhicule selon la revendication 1, dans laquelle la partie support pivotante comprend une broche cassable (14e) située au niveau du support de montage (14), et un trou de broche (13f) qui est ménagé au niveau de la garniture (13) et avec lequel la broche (14e) est mise en prise.

3. Structure de montage d'une caméra de véhicule selon la revendication 1 ou la revendication 2,
comprenant de plus :
au moins une bande (17) formée d'un matériau flexible et comprenant une partie de retenue (17a) à l'une de ses extrémités et une partie corps principal en forme de bande (17b) s'étendant de la partie de retenue (17a) vers une extrémité libre, une surface latérale de la partie corps principal en forme de bande (17b) comprenant un certain nombre de parties concaves et convexes (17c) ;
au moins une bande de base (16) comprenant une partie bride (16a), une partie de guidage de bande (16b) prévue de manière à être raccordée à la partie bride (16a) et une partie pince de retenue (16d) qui est formée de manière pliable au niveau d'une surface latérale extérieure de la partie de guidage de bande (16b),
dans laquelle la garniture (13) est adaptée pour être fixée à la carrosserie de véhicule (11) dans un état fixe, de sorte qu'un bord périphérique de l'ouverture (11a) de la carrosserie de véhicule (11) soit pris en sandwich entre la partie bride (13c) de la garniture (13) et la partie bride (16a) de base (16) de la bande, dans lequel état fixe la bande (17) est insérée à travers un trou d'insertion de bande (13h) ménagé dans la garniture (13), de sorte que la partie de retenue (17a) soit retenue sur celle-ci et que la base (16) de la bande soit glissée au-dessus de l'extrémité libre de la partie corps principal en forme de bande (17b) de la bande (17) de sorte que la partie de corps principal en forme de bande (17b) de la bande (17) soit guidée dans la partie de guidage de bande (16b) de la base (16) de la bande et que les parties concave et convexe (17c) de la bande (17) sont mises en prise par la partie pince de retenue (16d) de la base (16) de la bande afin d'empêcher la base (16) de la bande d'être déplacée en direction de l'extrémité libre de la bande (17).

4. Structure de montage d'une caméra de véhicule selon la revendication 1 ou la revendication 2,
dans laquelle un élément écrou (22, 23) qui est en appui sur un côté de surface intérieure de la carrosserie de véhicule est vissé sur une périphérie extérieure de la garniture (13) qui est en appui sur un côté de surface extérieure de la carrosserie de véhicule (11) au niveau de la partie bride (13c), la garniture (13) étant ainsi fixée à la carrosserie de véhicule (11).
